# EUROPEAN PATENT SPECIFICATION

(11) **EP 0 744 805 B1**
(45) Date of publication and mention of the grant of the patent: **23.09.1998**
(21) Application number: 96201354.6
(22) Date of filing: 21.05.1996
(51) Int. Cl.: H02G 3/18, H01R 13/74

(54) **A tamper-proof system for fixing electrical apparatus or utilisers to a wall support**
Sicherheitssystem zur Fixierung eines elektrischen Gerätes oder einer Verbraucher an einer Wandhalterung
Dispositif inviolable de fixation d'appareil électrique ou consommateur à un support mural

(30) Priority: 24.05.1995 IT MI951063
(43) Date of publication of application: 27.11.1996
(73) Proprietor: BTICINO S.P.A., 20154 Milano (IT)
(72) Inventor: Calderara, Ennio, 21050 Cuasso al Piano, Varese (IT)
(74) Representative: Maggioni, Claudio

(56) References cited:
- BE-A- 662 310
- GB-A- 2 194 395

## Description

The present invention relates to a system for fixing electrical devices such as sockets or switches, generally termed utilisers, in a wall support.

It is known that modular structures are available on the market for fixing switches, sockets and other electrical apparatus to walls.

Such modular structures consist of a support plate having a central rectangular aperture bounded by four walls or sides perpendicular to the plane of the plate and in which one or more pieces of modular electrical equipment, such as switches, two-way switches, sockets, indicator lights and the like, are installed, by snap-engagement of teeth of the modular electric apparatuses with a tooth of resilient tongues supported by two opposed ones of the four walls bounding the central aperture of the supporting plate.

An example of such modular structures is provided by FR-A-2.258.725.

The support plate is fixed to the wall by screws with a peripheral framing edge flush with the wall and with the central part, bounded by the sides and which houses the electrical apparatus, recessed into a box previously provided in the wall and open at the front which is generally, but not necessarily, flush with the wall.

The box, which is generally built into the wall, communicates with ducts which are also enclosed into the wall and which house the cables for connecting the various pieces of electrical equipment.

Among the electrical equipment which may be installed on the support, there may be electromechanical or electronic equipment with associated security devices which activate alarms should there be any attempt to remove the support from the wall to tamper with the circuits.

Such equipment is a typical component of anti-burglar security and alarm systems.

Such modular structures have the disadvantage that the various electrical devices are fixed in the support plate from the exposed front of the plate and are removable from the front by action on snap-engageable teeth which are to some extent accessible from the front.

Such modular structures are not, therefore fully secure against attempts at tampering.

A further problem lies in the fact that, in the case of electrical circuits without alarm or anti-intrusion protection, the removability of the devices from the exposed front of the plate also enables access to be gained to the electrical system so that its configuration may be modified.

The ever more stringent safety requirements imposed on electrical systems defined both by regulations issued by standards and safety bodies and at the legislative level, make essential for access to the electrical parts to be available to competent, authorised personnel who take personal responsibility for correct installation or maintenance of the system.

It is thus necessary to prevent access to the electrical devices and their interconnections by unauthorised persons.

In a patent application by the same applicant, a system for sealing a wall support is described which to some extent prevents and, in any case, demonstrates the removal of the wall support by the breaking of the seal.

This system does not however ensure that attempts cannot be made to tamper with and remove the "utilisers" from the front of the support or to make improper replacements or interconnections in the system without the removal of the support from the wall, whether for the purpose of deactivating an alarm system or for the purpose of modifying the system without breaking the seals.

The present invention remedies these problems and offers a fixing system for electrical apparatus or utilisers which is simple and reliable and prevents the removal of the utilisers from the support once these have been installed and the support has been fixed to the wall.

According to the present invention, there is provided a system for locking electrical apparatus or utilisers in a wall support for electrical apparatus, of the type in which a support plate for fixing to the wall forms a housing for a plurality of electrical devices, the housing being defined by two pairs of opposing parallel, housing walls, one of the pairs having a plurality of resilient, projecting tongues each terminating in a projecting, hooked tooth on a face of the wall exposed in the housing and snap-engaging with a tooth of electrical apparatus inserted in the housing to attach the apparatus to the plate, characterised in that said one pair of opposing housing walls has first engagement means on the face opposite the face exposed in the housing, accessible only when the support is removed from the wall, and in that the system further includes a pair of locking fingers having second engagement means which mate with the first means to couple the pair of fingers to said one pair of opposing housing walls, the pair of fingers so coupled preventing the resilient tongues from bending outwardly of the housing.

The removal is possible only after the detachment of the support from the wall and the disassembly of a pair of fingers firmly fitted into the support and accessible only when the support is removed from the wall.

The fingers form a locking device which prevents the resilient deformation of teeth formed on the support, forcing them to remain in a position in which they hold the various devices.

The fingers also reinforce the walls of the support to which the utilisers are fixed and act on all the devices installed.

This eliminates any risk that some of the utilisers might not be locked in the support and ensures that the sides of the support cannot be deformed. This is particularly important in the case of supports for a large number of modules, even 4, 6 or more, all being located next to each other in a line and fixed to very long, flat sides, which are thus relatively flexible.

The characteristics and advantages of the invention will become clearer from the description which follows and from the appended drawings in which:
Figure 1 is an exploded perspective view of a wall support from the front and of generic electrical equipment engaged in the support,
Figure 2 is a sectional view taken on the line A-A of Figure 1 showing the device and the support of Figure 1 separated from each other to the left of the centre line of the section and snap-engaged to the right of the centre line of the section,
Figure 3 is an exploded perspective view, from the back, of the preferred embodiment of a fixing system according to the invention including a wall support and a pair of clamping fingers.

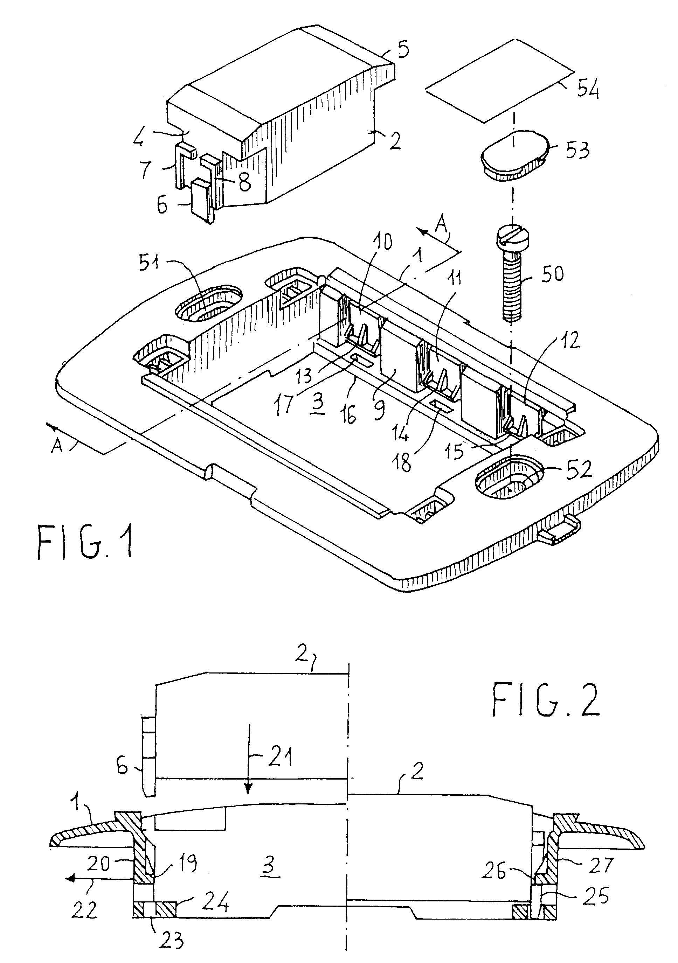

To provide a better understanding of the invention, Figure 1 is an exploded perspective view of a wall support 1 viewed from the side of its front face and of a "utiliser" or insert 2 snap-engaged in the support in known manner.

The support 1 is constituted by a substantially rectangular plate in which there is formed a rectangular-box-shaped housing 3 for a plurality, in general three or more, modular inserts, such as 2, which are arranged in the housing 3 juxtaposed with each other.

The inserts may carry out predetermined electrical functions or consist simply of closure members for the housing 3.

In each case they consist of a generally rectangular box-shaped housing of insulating material, such as plastics, which may contain electrical connecting elements, switches, indicator elements etc.

The opposite, smaller faces 4, 5 of the housing are each provided with a partially projecting, raised tooth 6, preferably but not necessarily flanked by two guide and reinforcing ribs 7, 8.

In Figure 1 only one tooth 6 is visible.

The two longer, opposite, parallel walls of the housing 3, only one of which is visible indicated 9 in Figure 1, are formed with a plurality of projecting tongues 10, 11, 12 terminating at their free ends in hooked teeth 13, 14, 15 which project into the housing 3.

Preferably, but not necessarily, the tongues are also provided with ribs which connect to the respective teeth in order to stiffen the tongues and provide lead-ins for teeth, such as 6, of utilisers to be fixed to the support.

The longer, parallel, opposite faces, such as 9, of the housing 3 are bent at right angles towards each other to form two shelves (one of which, 16, is visible in Figure 1) which define the maximum extent to which the utilisers can penetrate the housing 3.

Seats, such as 17, 18 in Figure 1, are formed in these shelves and are engaged by the projecting portions of teeth such as 6.

The interengagement of teeth, such as 6, on one side with a hooked tooth 13, 14, 15 and on the other with the shelves, such as 16, ensures that the utilisers are located in the plate housing without any clearance either in terms of depth or transversely.

The reinforcing guide ribs 7, 8 which cooperate with corresponding prismatic surfaces formed in the longer, opposing parallel walls of the housing 3 also contribute to this transverse positioning.

The support is fixed to the wall by means of a pair of screws (only one, 50, of which is shown in Figure 1) engaged in seats 51, 52 in the support plate, each with a head housed in the support and suitably covered and hidden by a removable plug 53 sealed by an adhesive security seal 54 against any tampering with the support once installed.

For greater clarity, Figure 2 shows a "utiliser" 2 to the left of the centre line aligned with its housing 3 in the plate 1 ready for insertion in the housing.

The tooth 6 is thus aligned with the tooth 19 at the end of the resilient tongue 20 fixed so as to project from the plate 1.

When the utiliser 1 is introduced into the housing 3, in the direction indicated by the arrow 21, the tooth 6 interferes with the tooth 19 so as to force the resilient tongue 20 to bend in the direction indicated by the arrow 22.

When the utiliser 2 is completely inserted in the housing 3, as illustrated in the right hand part of Figure 2, the tooth 6 is inserted in the seat 23 in the shelf 24 and has passed beyond the tooth 19 so that the tongue 20 can return to its rest position, with the consequent engagement of the teeth 6 and 19.

On the opposite face of the utiliser 2, a tooth 25 engages a tooth 26 of the resilient tongue 27.

It is clear that the removal of the utiliser 2 from the housing is possible only by action on the pair of tongues 20 and 27 so as to release the teeth 19 and 26 from the teeth 6 and 25 of the utiliser.

This operation is easy when the plate is removed from the wall but, unfortunately, it is also possible, although less easy, if use is made of the clearance available between the front wall of the plate and the utilisers housed therein.

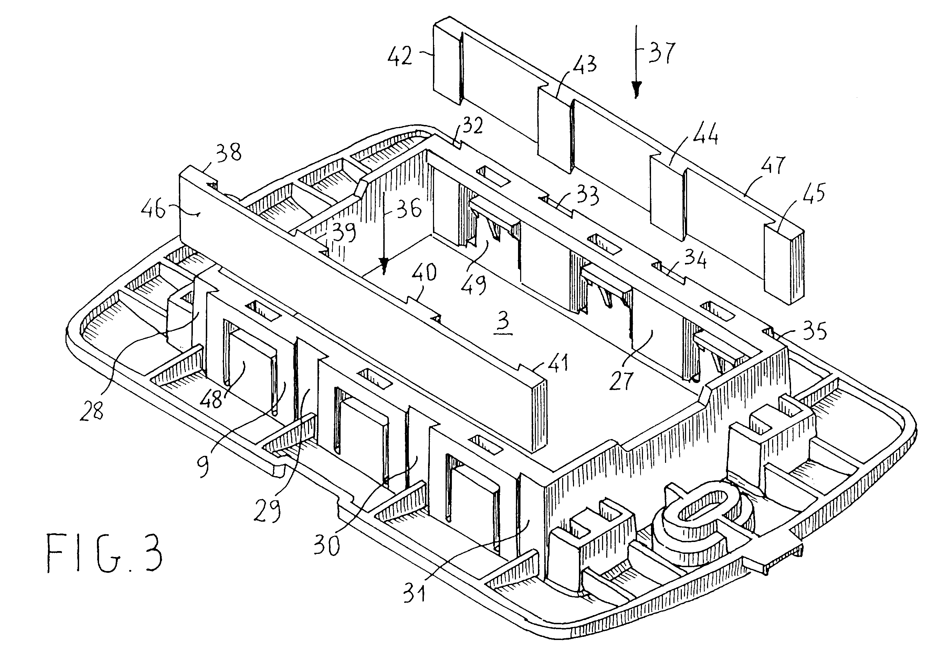

The locking system which is the subject of the present invention acts to prevent this second eventuality and is shown in Figure 3, viewed from the rear face of the plate 1.

The longer opposite walls 9, 27 of the housing 3 are provided, on the outside of the housing 3, with dove-tailed mortices 28, 29, 30, 31, 32, 33, 34, 35 into which fit dove-tailed teeth 38, 39, 40, 41, 42, 43, 44, 45 of two bars or fingers 46, 47 in the direction indicated by the arrows 36, 37.

These bars, which extend in contact with the resilient tongues, such as 48, 49, outside thereof, prevent their resilient deformation towards the exterior and ensure that the mutual engagement of the teeth of the various utilisers and the resilient teeth is irreversible.

Obviously the insertion of the utilisers in the housing in the plate must precede the application of the fingers 46, 47 to the support plate and, conversely, in order to remove the utilisers from the support plate, it is necessary for the fingers first to be removed, which operation is possible only when the support plate is removed from the wall.

Conveniently the fingers 46, 47 may be made of plastics material, possibly reinforced with glass fibres.

These fingers, as well as insuring that the utilisers are locked in the plate housing, also conveniently stiffen the opposing, longer walls 9, 27 against bending.

This is particularly important in a support plate intended to house a plurality of modular utilisers because of the considerable length of the opposing faces 9, 27 and their consequent greater flexibility which, in the absence of stiffening, may make the fixing of the modules precarious.

It is thus clear that, with only a single pair of fingers, it is possible to ensure that more than two modules, and in practice 3, 4 or 6 modules, can be locked in the housing.

This prevents any attempt at tampering with the support plate installed in the wall from the exterior.

It is clear that the description above relates solely to a preferred embodiment of the invention and that many variations may be made therein-within the scope of the appended claims.
For example the mortices in the faces 9, 27 and the teeth of the fingers 46, 47 could be T-shaped instead of dove-tailed in shape and the mortice/tenon rôle may be interchanged.

Similarly, with obvious modifications, the insertion and removal of the utilisers into and from their housings may occur from the inner face of the support plate instead of from the front face.

## Claims

1. A system for locking electrical apparatus or utilisers (2) in a wall support (1) for electrical apparatus, of the type in which a support plate (1) for fixing to the wall forms a housing (3) for a plurality of electrical devices (2), the housing being defined by two pairs of opposing parallel, housing walls (9,27), one of the pairs having a plurality of resilient, projecting tongues (10,11,12) each terminating in a projecting, hooked tooth (13,14,15) on a face of the wall exposed in the housing (3) and snap-engaging with a tooth (6) of electrical apparatus (2) inserted in the housing to attach the apparatus to the plate (1), characterised in that said one pair of opposing housing walls (9,27) has first engagement means (28 to 35) on the face opposite the face exposed in the housing, accessible only when the support is removed from the wall, and in that the system further includes a pair of locking fingers (46,47) having second engagement means (38 to 45) which mate with the first means (28 to 35) to couple the pair of fingers (46,47) to said one pair of opposing housing walls (9,27), the pair of fingers (46,47) so coupled preventing the resilient tongues (10,11,12) from bending outwardly of the housing (3).

2. A locking system as in Claim 1 in which the first (28 to 35) and second (38 to 45) engagement means are mating, dove-tailed mortices and tenons.

3. Wall support (1) for electrical apparatus (2) for locking system as in Claim 1, characterised in that the said one pair of opposing housing walls (9,27) has first engagement means (28 to 35) on a wall face opposite the face exposed in the housing (3), the first engagement means (28 to 35) coupling with the second engagement means (38 to 45), which mate with the first means, of a pair of clamping fingers (46,47).

4. A wall support (1) as in Claim 3, in which the first engagement means (28 to 35) are dove-tailed mortices.

5. A clamping finger (46,47) for a locking system as in Claim 1, characterised in that it includes an elongate bar having first engagement means (38 to 45) located transverse the direction of greatest length of the bar, for engaging with second engagement means (28 to 35) of a wall support (1) for electrical devices (2), which second means (28 to 35) mate with the first engagement means (38 to 45).

6. A clamping finger (46,47) as in Claim 5, in which the first engagement means (38 to 45) are dove-tailed tenons.

## Patentansprüche

1. Ein System zum Verriegeln einer elektrischen Vorrichtung oder eines Verbrauchers (2) in einem Wandträger (1) für eine elektrische Vorrichtung, des Typs, bei dem eine Trägerplatte (1) zum Befestigen an der Wand ein Gehäuse (3) für eine Mehrzahl von elektrischen Geräten (2) bildet, wobei das Gehäuse durch zwei Paare von gegenüberliegenden parallelen Gehäusewänden (9, 27) definiert ist, wobei eines der Paare eine Mehrzahl von elastischen vorstehenden Zungen (10, 11, 12) hat, von denen jede in einem vorstehenden Hakenzahn (13, 14, 15) auf einer Seite der Wand endet, die in dem Gehäuse (3) freiliegend ist, und mit einem Zahn der elektrischen Vorrichtung (2), die in das Gehäuse eingeführt ist, Eingriff nimmt, um die Vorrichtung an der Platte (1) zu befestigen, dadurch gekennzeichnet, daß eines der Paare von gegenüberliegenden Gehäusewänden (9, 27) eine erste Ineingriffnahmeeinrichtung (28 - 35) auf der Seite, die der in dem Gehäuse freiliegenden Seite gegenüberliegt, hat, auf die nur dann zugegriffen werden kann, wenn der Träger von der Wand entfernt wird, und daß das System ferner ein Paar von Verriegelungsfingern (46, 47) hat, die eine zweite Ineingriffnahmeeinrichtung (38 - 45) aufweisen, die mit der ersten Einrichtung (28 - 35) zusammenpassen, um das Paar von Fingern (46, 47) mit dem einen Paar der gegenüberliegenden Gehäusewände (9, 27) zu koppeln, wobei das Paar von Fingern (46, 47) derart gekoppelt ist, daß verhindert wird, daß die elastischen Zungen (10, 11, 12) nach außen aus dem Gehäuse (3) gebogen werden.

2. Ein Verriegelungssystem gemäß Anspruch 1, bei dem die erste (28 - 35) und die zweite (38 - 45) Ineingriffnahmeeinrichtung zusammenpassende schwalbenschwanzförmige Nuten und Zapfen umfassen.

3. Wandträger (1) für eine elektrische Vorrichtung (2) für ein Verriegelungssystem nach Anspruch 1, dadurch gekennzeichnet, daß das eine Paar von gegenüberliegenden Gehäusewänden (9, 27) eine erste Ineingriffnahmeeinrichtung (28 - 35) auf einer Wandseite hat, die der Seite gegenüberliegt, die in dem Gehäuse (3) freiliegend ist, wobei die erste Ineingriffnahmeeinrichtung (28 - 35) mit der zweiten Ineingriffnahmeeinrichtung (38 - 45), die mit der ersten Einrichtung zusammenpaßt, eines Paars von Klemmfingern (46, 47) koppelt.

4. Ein Wandträger (1) gemäß Anspruch 3, bei dem die erste Ineingriffnahmeeinrichtung (28 - 35) schwalbenschwanzförmige Nuten aufweist.

5. Ein Klemmfinger (46, 47) für ein Verriegelungssystem gemäß Anspruch 1, dadurch gekennzeichnet, daß derselbe einen länglichen Balken mit einer ersten Ineingriffnahmeeinrichtung (38 - 45), die transversal zu der Richtung der größten Länge des Balkens positioniert ist, zur Ineingriffnahme mit der zweiten Ineingriffnahmeeinrichtung (28 - 35) eines Wandträgers (1) für elektrische Geräte (2) umfaßt, wobei die zweite Einrichtung (28 - 35) mit der ersten Ineingriffnahmeeinrichtung (38 - 45) zusammenpaßt.

6. Ein Klemmfinger (46, 47) gemäß Anspruch 5, bei dem die erste Ineingriffnahmeeinrichtung (38 - 45) schwalbenschwanzförmige Zapfen umfaßt.

## Revendications

1. Système pour verrouiller des appareils électriques ou dispositifs utilisateurs (2) dans un support mural (1) pour appareil électrique du type dans lequel une plaque (1) de support destinée à être fixée au mur forme un boîtier (3) pour plusieurs dispositifs électriques (2), le boîtier étant défini par deux paires de parois parallèles et opposées (9, 27) de boîtier, une première des paires ayant plusieurs languettes élastiques (10, 11, 12) en saillie se terminant chacune par une dent (13, 14, 15) en forme de crochet, en saillie, sur une face de la paroi à découvert dans le boîtier (3) et s'encliquetant avec une dent (6) d'un appareil électrique (2) introduit dans le boîtier pour relier l'appareil à la plaque (1), caractérisé en ce que ladite première paire de parois opposées (9, 27) du boîtier comporte des premiers moyens (28 à 35) d'enclenchement sur la face opposée à la face à découvert dans le boîtier, accessibles uniquement lorsque le support est enlevé du mur, et en ce que le système comprend en outre une paire de doigts de verrouillage (46, 47) ayant des seconds moyens d'enclenchement (38 à 45) qui s'accouplent avec les premiers moyens (28 à 35) pour accoupler la paire de doigts (46, 47) à ladite première paire de parois opposées (9, 27) du boîtier, la paire de doigts (46, 47) ainsi accouplée empêchant les languettes élastiques (10, 11, 12) de fléchir vers l'extérieur du boîtier (3).

2. Système de verrouillage selon la revendication 1, dans lequel les premiers (28 à 35) et seconds (38 à 45) moyens d'enclenchement sont des mortaises et tenons complémentaires à queues d'aronde.

3. Support mural (1) pour appareil électrique (2) pour un système de verrouillage selon la revendication 1, caractérisé en ce que ladite première paire de parois opposées (9, 27) du boîtier comporte des premiers moyens d'enclenchement (28 à 35) sur une face de paroi opposée à la face à découvert dans le boîtier (3), les premiers moyens d'enclenchement (28 à 35) s'accouplant avec les seconds moyens d'enclenchement (38 à 45), qui sont complémentaires des premiers moyens, d'une paire de doigts (46, 47) de bridage.

4. Support mural (1) selon la revendication 3, dans lequel les premiers moyens d'enclenchement (28 à 35) sont des mortaises à queue d'aronde.

5. Doigt de bridage (46, 47) pour un système de verrouillage selon la revendication 1, caractérisé en ce qu'il comprend une barre allongée ayant des premiers moyens d'enclenchement (38 à 45) situés transversalement à la direction de la plus grande longueur de la barre, pour s'enclencher avec des seconds moyens d'enclenchement (28 à 35) d'un support mural (1) pour des dispositifs électriques (2), lesquels seconds moyens (28 à 35) sont complémentaires des premiers moyens d'enclenchement (38 à 45).

6. Doigt de bridage (46, 47) selon la revendication 5, dans lequel les premiers moyens d'enclenchement (38 à 45) sont des tenons à queue d'aronde.
